# EUROPÄISCHE PATENTSCHRIFT

(11) **EP 1 474 999 B1**
(45) Veröffentlichungstag und Bekanntmachung des Hinweises auf die Patenterteilung: **25.07.2007**
(21) Anmeldenummer: 04007991.5
(22) Anmeldetag: 01.04.2004
(51) Int. Cl.: A23L 1/30

(54) **Nahrungsergänzungspräparat enthaltend alpha-Liponsäure und Anthocyanoside**
Nutritional supplement comprising alpha lipoic acid and anthocyanosides
Supplément nutritionnel comprenant de l'acide lipoique et des anthocyanosides

(30) Priorität: 07.05.2003 DE 20307098 U
(43) Veröffentlichungstag der Anmeldung: 10.11.2004
(73) Patentinhaber: Dr. GERHARD MANN chem.-pharm. Fabrik GmbH, D-13581 Berlin (DE)
(72) Erfinder: Bellmann, Günther, 13593 Berlin (DE); Claus-Herz, Gudrun, 14167 Berlin (DE)
(74) Vertreter: Maiwald Patentanwalts GmbH

(56) Entgegenhaltungen:
- WO-A-02/100329
- US-A- 6 103 756

## Beschreibung

Die vorliegende Erfindung betrifft ein Nahrungsergänzungspräparat gemäß Anspruch 1, das als vorbeugendes Mittel gegen Augenerkrankungen und/oder zur Unterstützung bei der Behandlung von Augenerkrankungen geeignet ist und als Wirkstoffbestandteile alpha-Liponsäure und Anthocyanoside umfasst. Im besonderen betrifft die vorliegende Erfindung ein Nahrungsergänzungspräparat, das Anthocyanoside aus bzw. in Form von Heidelbeerextrakt enthält.

Es ist bekannt, dass sowohl der menschliche also auch der tierische Organismus in der Lage sind, alpha-Liponsäure zu synthetisieren. Alpha-Liponsäure wird nach oraler Gabe gut resorbiert und in zahlreichen Körpergeweben rasch in die reduzierte Form Dihydroliponsäure umgewandelt.

Alpha-Liponsäure, wie auch seine reduzierte Form, wirkt in fett- und in wasserlöslichen Medien als potentes Antioxidans. Alpha-Liponsäure wird als Wirkstoff zur Behandlung von diabetischen Neuropathien eingesetzt, ferner wird es gegen Reperfusionsschäden nach Ischämie, gegen Vergiftungen durch Amanita-Pilze, bei Alkoholleber, zur Prävention neurologischer Störungen durch Schutz gegen oxidative Schädigung des Zentralnervensystems, zur Suppression der HIV-Replikation durch Hemmung der reversen Transkriptase, zum Schutz gegen die Wirkung von Zigarettenrauch sowie bei Katarakten und Glaukomen eingesetzt.

Auch Heidelbeerextrakte mit den darin enthaltenen Anthocyanosiden haben antioxidative Wirkung. Die Anthocyanoside gehören zu den pflanzlichen Polyphenolen, die beispielsweise in Trauben und Heidelbeeren vorkommen. Anthocyanoside stabilisieren außerdem Kollagenfasern, fördern die Kollagenbiosynthese, senken die Kapillarpermeabilität und - Fragilität und inhibieren die Plättchenaggregation.

Beispielsweise offenbart die EP 1 072 365 die Verwendung von pflanzliche Polyphenole in Kombination mit anderen Nahrungsergänzungsstoffen für die Behandlung von Eisenüberschuss.

US 6103756 offenbart ein Nahrungsergänzungsmittel zur Vorbeugung und Behandlung von grauem Star enthaltend α-Liponsäure und Heidelbeerextraht.

Die Aufgabe der vorliegenden Erfindung besteht darin, ein Nahrungsergänzungsmittel bereitzustellen, welches besonders für die Vorbeugung und/oder unterstützende Behandlung bei und von Augenerkrankungen, besonders von Glaukom (grüner Star) und Retinopathia diabetica, geeignet ist.

Diese Aufgabe wird durch das erfindungsgemäße Nahrungsergänzungsmittel gemäß Anspruch 1 gelöst, welches als Wirkstoffbestandteile eine Kombination von alpha-Liponsäure und Anthocyanosiden, insbesondere aus bzw. in Form von Heidelbeerextrakt enthält.

Als Wirkstoffbestandteile enthält das erfindungsgemäße Nahrungsergänzungspräparat unter anderem alpha-Liponsäure und Anthocyanoside, wobei die Anthocyanoside bevorzugt in Form von oder aus Heidelbeerextrakt eingesetzt werden.

Der Begriff "Anthocyanoside" wird im Sinne der vorliegenden Erfindung zur Bezeichnung natürlicher oder (halb-)synthetischer, bevorzugt natürlicher Anthocyanoside, Anthocyanosid-Flavonoide bzw. Anthocyanine verwendet.

Vorzugsweise umfasst das erfindungsgemäße Nahrungsergänzungsmittel zusätzlich Vitamin C, Vitamin E, Vitamin B1 und Vitamin B₁₂.

Die bevorzugte Ausführungsform der vorliegenden Erfindung stützt sich auf drei Wirkstoffgruppen:
1. Neuroprotektion durch α-Liponsäure plus Vitamin B₁ plus Vitamin B₁₂.
2. Antioxidantien (alpha-Liponsäure, Vitamin C und Vitamin E)
3. Durchblutungsförderung durch die unterstützende Wirkung von Heidelbeerextrakt.

Der Heidelbeerextrakt zeichnet sich durch einen sehr hohen Gehalt an Anthocyanosiden aus.

Es hat sich gezeigt, dass die Kombination der Wirkstoffe alpha-Liponsäure und der Anthocyanoside sich für die Anwendung bei Augenerkrankungen, entweder als Vorbeugende oder die Behandlung unterstützende Maßnahme, besonders gut eignet. Im Einzelfall wird gegebenenfalls sogar ein synergistischer Effekte beobachtet. Besonders geeignet ist eine Kombination von alpha-Liponsäure, Anthocyanosiden und Vitaminen, bevorzugt werden Vitamin C, Vitamin E, Vitamin B₁ und Vitamin B₁₂ eingesetzt.

Das Nahrungsergänzungspräparat wird vorzugsweise zur oralen Anwendung in Form einer Tablette, Dragee oder einer Kapsel verwendet und enthält bezogen auf die Tagesdosis einen Gehalt, der 150 mg alpha-Liponsäure und vorzugsweise dabei mindestens 25 mg Anthocyanosiden aus bzw. in Form von Heidelbeerextrakt entspricht, als Wirkstoffbestandteile.

Das erfindungsgemäße Nahrungsergänzungsmittel umfasst ferner Vitamin C, Vitamin E, Vitamin B₁ und Vitamin B₁₂. Vitamin E kann in Reinform oder als Salz und in künstlicher oder natürlicher Form eingesetzt werden. Besonders bevorzugt ist das natürliche Vitamin E als Acetatsalz.

Als Anthocyanosidquelle wird ein Heidelbeerextrakt verwendet, der in standardisierter Form zwischen 20 bis 25% Anthocyanoside enthält. Die alpha-Liponsäure kann beispielsweise in reiner Form, oder in technisch verarbeiteter Form, z.B. als Granulat mit 69% alpha-Liponsäure, Lactose und Povidon eingesetzt werden.

Zusätzlich kann das erfindungsgemäße Nahrungsergänzungsmittel noch weitere Vitamine, Provitamine und Coenzyme als Wirkstoffe enthalten. Diese Wirkstoffe können, ohne darauf beschränkt zu sein, aus der folgenden Liste an Wirkstoffen ausgewählt werden: Vitamin A1, Vitamin A2, Retinoide, Vitamin B2, Vitamin B6, Biotin, Folsäure, Nicotinsäure(amid), Pantothensäure, Vitamin D2, Vitamin D3, Vitamin F, Vitamin G, Vitamin T, Vitamin U, Vitamin H, Vitamin H', Vitamin I, Vitamin J, Vitamin K, Vitamin L, Vitamin P, Vitamin Q, Coenzym A, Coenzym B12, Coenzym F, Coenzym I bzw. II, Coenzym M, Coenzym Q, besonders Coenzym Q10, Coenzym R. Je nach Wahl der Arzneiform werden verschiedene handelsübliche Formen verwendet.

Die bevorzugte Form des erfindungsgemäßen Nahrungsergänzungsmittels ist eine Filmtablette. Vorzugsweise besteht die Tablette aus einem Tablettenkern, der mit einem Filmüberzug zu versehen ist.

Neben den Wirkstoffen enthält der Tablettenkern gegebenenfalls weitere übliche Hilfsstoffe. Diese Hilfsstoffe können, ohne darauf beschränkt zu sein, aus der folgenden Liste an Hilfsstoffen ausgewählt werden: Povidon, Cellulose und Cellulosederivate, Stärke und Stärkederivate, Stearinsäue, Gelatine, Natriumaluminiumsilikat, Siliziumdioxid, Maltodextrin, Dextrose, Talkum, Titandioxid, Calciumcarbonat, Pflanzenfette, Tricalciumphosphat, Antioxidantien, Stabilisatoren, Gummi arabicum, Calciumphosphate, Calciumsilikat, Saccharose, Natrimcitrat, Zitronensäure.

Für das Filmcoating können übliche Coatingstoffe verwendet werden. Die folgenden Stoffe können beispielsweise verwendet werden: Cellulose und Cellulosederviate, Titandioxid, Farbstoffe, Hydroxypropylcellulose, Talkum, Polymethacrylate, Schellack, Polyvinylpyrolidon, Polyvinylalkohol, Polyethaylenglykole, Triacetin, Triethylcitrat, Propylenglykol, Glycerol, Gummi arabicum, Talkum, Siliciumdioxid, Glycerolmonostearat. Bevorzugt werden Hydroxypropylmethylcellulose, Hydroxypropylcellulose, mikrokristalline Cellulose, Talkum, Baumwollsamenöl, Titandioxid und Farbstoffe (bevorzugt Eisenoxide, Indigo Carmine, Al-Lack und Karminsäure).

Die aufgetragene Filmmenge beträgt 1 bis 10 %, bevorzugt 2 bis 8% und besonders bevorzugt 3 bis 6% der Kernmenge.

Erfindungsgsgemäß enthält die Zusammensetzung bezogen auf die Tagesdosis:
150 mg alpha-Liponsäure
100 mg Heidelbeerextrakt (enthaltend 20 - 25 % Anthocyanoside)
70 mg Vitamin C
36 mg Vitamin E
3,6 mg Vitamin B₁
9 µg Vitamin B₁₂ und
mikrokristalline Cellulose, Lactose und Magnesiumstearat.

Vorzugsweise werden Tabletten hergestellt, die jeweils die Hälfte der oben angegebenen Mengen enthalten, wobei eine Einnahme von 2 Tabletten pro Tag empfohlen wird.

Die Herstellung der Darreichungsformen, z.B. Tablette, Dragee oder Kapsel, erfolgt nach allgemein üblichen Verfahren, z.B. durch Kompaktierung, Granulierung und Abfüllung in Gelatinekapseln, etc.. Üblicherweise werden zur Herstellung von Tabletten die Tablettenkernbestandteile trocken vermischt und zu Tabletten verpresst. Anschließend wird beispielsweise durch Sprühen oder Lackieren der Filmüberzug aus einer geeigneten Lösung oder Suspension der Coatingbestandteile aufgetragen.

Das erfindungsgemäße Nahrungsergänzungsmittel ist besonders geeignet für die Vorbeugung und zur unterstützenden Behandlung bei Augenerkrankungen, wie etwa Glaukom (grüner Star) und Retinopathia diabetica (bei Diabetes mellitus auftretende Mikroangiopathie des Augenhintergrundes). Ferner kann das erfindungsgemäße Nahrungsergänzungsmittel zur Verbesserung des Sehvermögens, insbesondere des Nachtsehvermögens beitragen.

## Patentansprüche

1. Nahrungsergänzungspräparat, **dadurch gekennzeichnet, dass** es bezogen auf die Tagesdosis folgende Zusammensetzung aufweist:
150 mg alpha-Liponsäure
100 mg Heidelbeerextrakt, enthaltend 20 - 25 % Anthocyanoside
70 mg Vitamin C
36 mg Vitamin E
3,6 mg Vitamin B₁
9 µg Vitamin B₁₂
und mikrokristalline Cellulose, Lactose und Magnesiumstearat.

## Claims

1. Dietary supplement preparation, **characterized in that** it has the following composition, referring to a daily dosage:
150 mg of alpha-lipoic acid
100 mg of blueberry extract, containing 20 - 25 % of anthocyanosides
70 mg of vitamin C
36 mg of vitamin E
3,6 mg of vitamin B₁
9 µg of vitamin B₁₂
and microcrystalline cellulose, lactose and magnesium stearate.

## Revendications

1. Complément alimentaire **caractérisé en ce qu'**il comporte, par rapport à la dose quotidienne, la composition suivante :
150 mg d'acide alpha lipon
100 mg d'extrait de myrtille, contenant 20 - 25 % d'anthocyanoside
70 mg de vitamine C
36 mg de vitamine E
3,6 mg de vitamine B₁
9 µg de vitamine B₁₂
et de la cellulose microcristalline, de la lactose et du stéarate de magnésium.
